# EUROPEAN PATENT SPECIFICATION

(11) **EP 1 567 779 B1**
(45) Date of publication and mention of the grant of the patent: **29.11.2006**
(21) Application number: 03812404.6
(22) Date of filing: 01.12.2003
(51) Int. Cl.: F16C 35/06, F16C 41/00, B25B 27/06

(54) **A SPARE SHAFT BEARING, A METHOD FOR MOUNTING SUCH A SPARE BEARING AND A MEANS FOR EFFECTING SUCH MOUNTING**
RESERVELAGER, VERFAHREN ZUR MONTAGE SOLCH EINES RESERVELAGERSUND MITTEL ZUR DURCHFÜHRUNG SOLCH EINER MONTAGE
PALIER DE RESERVE, PROCEDE DE MONTAGE DE CELUI-CI ET MOYENS PERMETTANT D'EFFECTUER UN TEL MONTAGE

(30) Priority: 03.12.2002 SE 0203574
(43) Date of publication of application: 31.08.2005
(73) Proprietor: Aktiebolaget SKF, 415 50 Göteborg (SE)
(72) Inventor: WENDEBERG, Hans, SE-426 71 Vastra Frolunda (SE); LEANDER, Hakan, SE-423 34 Torslanda (SE); KELLSTRÖM, Magnus, SE-433 41 Partille (SE); KULLIN, Jonas, SE-438 91 Landvetter (SE)
(74) Representative: Westman, Per Börje Ingemar
(86) International application number: PCT/SE2003/001855
(87) International publication number: WO 2004/051104

(56) References cited:
- US-A- 5 229 676

## Description

### Background of the invention

The present invention refers to a well-known arrangement according to the preamble of claim 1 and to a method to replace an ordinary bearing in such an arrangement.

At large rotor shafts, e.g. rotor main shafts of wind turbines, the shaft is often supported in very large rolling bearings, where the outer diameter of the bearing can amount to 1500 mm and more, and it is thereby very difficult to exchange the bearing in case of bearing failure. Without special solutions it should be necessary at a bearing break-down to dismount the main shaft itself, which can be situated at a level of 80 meters or more above the ground, to lower the heavy main shaft with its bearing to the ground and to replace the bearing which has failed, and thereafter again to lift up the main shaft with its new bearing and mount it in the turbine. This is of course a time-wasting and expensive task and particularly as the wind turbines are often located in areas, which are difficult to reach with mobile cranes, which have sufficient lifting range and lifting power for the rather heavy lifts concerned.

In order to facilitate this replacement of bearings and avoid the necessity to dismount the main shaft and lower it to the ground, it has earlier been suggested to use split bearing rings, which means that it has been possible to separate the parts of the split rings in a bearing which has failed and to replace them for other such parts in the position of the shaft in the turbine, thus eliminating the need for bearing exchange at ground level.

However, this solution has certain drawbacks as the split rings are more expensive to produce than one-piece rings, at the same time as the split bearing ring never will get the same performance as the one-piece rings. This is particularly expressed regarding the grip between the bearing rings and their seats, which can result in fretting corrosion.

### Purpose and most relevant features of the invention

The purpose of he present invention is now to propose a spare shaft bearing by means of which the above mentioned drawbacks are substantially reduced in order to give a substantially extended service life to the bearing assembly, without the need of dismounting it and making the replacement of the failed bearing at ground level, and this has been achieved with a spare shaft bearing as defined in claim 1 of the accompanying claims.
The invention also incorporates a method for replacing a failed bearing, supporting a shaft, without need for separating the shaft from a wind power turbine or another machine equipment with which it cooperates, and this method is characterized by the features defined in the characterizing part of claim 5.
Finally the invention incorporates a means for effecting the bearing replacement operation defined in claim 5, and this means is characterized by the contents in claim 9.

### Brief description of the drawings

Hereinafter the invention will be further described with reference to the accompanying drawings, which show an embodiment of the spare shaft bearing according to the invention, and the means for mounting it.
Fig. 1 shows schematically a shaft with a bearing supporting the shaft shown in section, and also a spare bearing according to the invention, also shown in longitudinal section.
Fig. 2 is a schematic view of a portion of a shaft and a spare bearing during mounting by means of a means also encompassed by the present invention.

### Description of the preferred embodiment

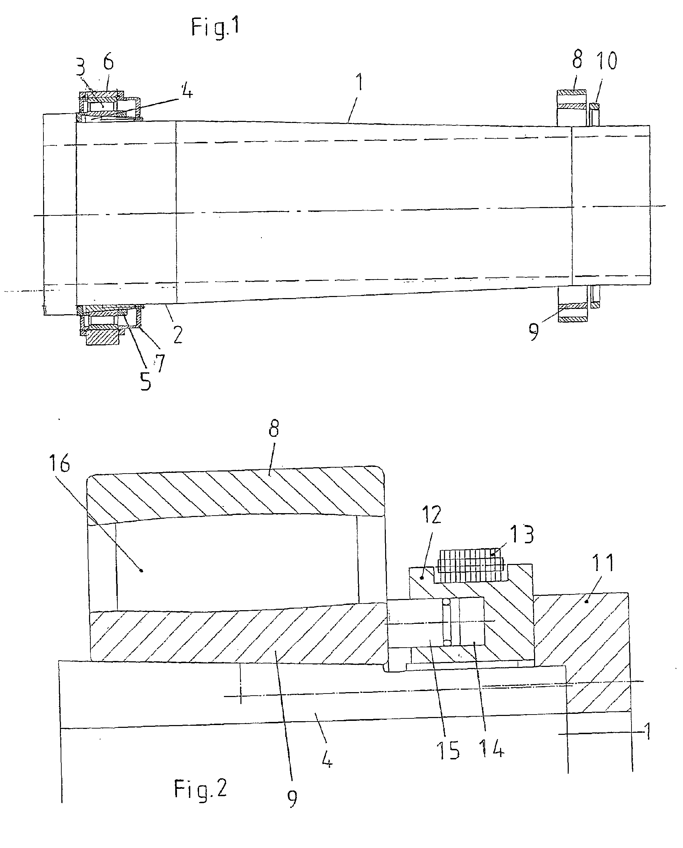

Fig. 1 shows a shaft 1, for instance a rotor shaft of a wind power mill. The shaft 1 in this embodiment is made as an externally tapering tubular shaft, which at one side has a cylindrical section 2. The shaft 1 is supported in a rolling bearing 3, in the embodiment shown a toroidal roller bearing, which has the ability of mutual axial displacement and angular misalignment between the inner and outer bearing rings. The inner ring of the bearing 3 has a tapering bore and is fitted to the shaft via an adapter sleeve 4, and secured in position by means of a locating nut 5. The bearing 2 is enclosed in a housing intimated at 6 and 7, and where at least a cover part 7 of the housing is detachably connected to the other part 6 of the housing, thus that the bearing is accessible after dismounting of the housing part 7, which is also split in two parts (not further shown) for allowing it to be readily removed. Around the shaft 1, at a position axially spaced apart from the bearing housing 6,7 along the reduced portion of the tapering shaft is provided an one-piece outer bearing ring 8, an one-piece inner bearing ring 9 and a one-piece locating nut 10, which together form a set of components for a spare bearing. With these components 8, 9 and 10 positioned at a distance from the ordinary bearing 3, where they are retained in a (not shown) manner, they are in a semi-mounted position ready for substituting the ordinary bearing, if this should fail, or measurements should prove that it would soon fail.

In case such an ordinary bearing should break down or a condition monitoring system or the like should indicate that a failure is near at hand, it is comparatively easy to open the bearing housing by removing the split bearing housing cover 7, which due to its two-piece form can be easily removed from the shaft 1 without the necessity of dismounting the shaft. When the bearing housing then is open, it is easy to reach the bearing and to dismount it from the adapter sleeve 4 in conventional manner after loosening the locating nut 5, thereby driving the bearing out off the housing 7. Then the outer and inner bearing rings of the ordinary bearing and its locating nut 5 are each cut up to make it possible to remove them from the shaft 1.

Thereupon, a set of rolling bodies 16, as can be seen in Fig. 2 (in the present case designed as toroidal rollers) is inserted between the outer and inner rings 8, 9 of the spare bearing, possibly together with a split cage (not shown) for separating and guiding the rollers.

With the rollers inserted between the bearing rings 8, 9 this spare bearing is pushed axially to the left in Fig. 1 until it engages and enters on the adapter sleeve 4.

In this position the mounting means according to the invention is fitted around the shaft 1 as can be seen in Fig. 2 showing a longitudinal section of a portion of the shaft and the spare bearing 8, 9 during mounting at the position of the now removed ordinary bearing 3, shown in Fig. 1. The mounting means consists of a tool kit incorporating a split support ring 11, a split hydraulic drive up tool comprising a number of individual tool segments 12, which are held together around the adapter sleeve 4 by means of a flat chain 13 or the like. Each one of the individual tool segments 12 has at least one recess 14, preferably of cylindrical shape and in which is movably fitted a plunger 15. To each such recess 14 is connected a (not shown) conduit which can be connected to a conventional hydraulic pump (not shown).

When the mounting means has been fitted with the front ends of the plungers 15 engaging the inner bearing ring 9, the plungers 15 are urged outward from their recesses 14 by injection of hydraulic oil, whereby the inner bearing ring 9 is pushed upon the adapter sleeve 4 until a desired grip is obtained between bearing ring 9, adapter sleeve and shaft 1.

When the desired grip has been reached during the drive-up operation, the recesses 14 are drained and the support ring 11 is loosened, whereupon the chain 13 is disconnected and the tool segments are removed. The spare locking ring 10 (Fig. 1) then is screwed up on the threaded portion of the adapter sleeve 4 to secure the inner bearing ring 9 of the spare bearing in its position. Thereupon the split housing cover 7 (see Fig. 1) can be easily attached and the rotor shaft is retrofitted with a new bearing having the same good performance as that of the ordinary bearing, also regarding interference fit, which can not be guaranteed with bearings with split rings, and which can result in seating wear.

At a bearing breakdown or indications of a coming breakdown it is possible, in this manner to make a required exchange of the failing bearing for a new bearing having non-split bearing rings and locating nut, in a time span which is very short as compared to the earlier used dismounting of the rotor shaft and with bearing rings which are not weakened or otherwise impaired by being split.

The spare bearing components arranged about the rotor shaft are preferably coated with an anti-corrosive agent, and the components are kept apart during their rest time, whereby no wear will occur. This is not the case if a complete spare bearing was arranged around the shaft. Before the spare bearing is mounted, the components are cleaned to remove the anti-corrosive rest time coating.

In addition to the pair of un-split bearing rings and the locating nut arranged about the shaft there must be kept in store sets of rollers 16, a split cage (not shown) and a tool kit 11-15. However for a wind power park having e.g. 100 turbines, it is probably sufficient to store only two or three sets of rollers and split cages and only one tool kit.

The invention is not limited to the embodiments shown in the attached drawings and described in connection thereto, but modifications and variants are possible within the scope of the accompanying claims. Although it has been described and shown that a one-piece locating nut is arranged about the shaft together with the one-piece bearing rings, it is of course possible to use a locking device made in more than one part, which can be readily mounted around the shaft without the necessity to dismount the shaft or to position the locking device around the shaft as a spare part.

## Claims

1. Arrangement comprising a rotary shaft (1) supported in an ordinary rolling bearing (3) comprising an inner ring, an outer ring and a number of rolling bodies arranged between the inner and outer ring, the inner ring being fitted with a grip to the shaft (1) and secured by a locating nut (5) in a manner allowing it to be released from said grip and the outer ring being fitted in a housing (6,7) in a manner allowing it to be pushed out of the bearing housing,
**characterized by** further comprising
a spare shaft bearing incorporating a one-piece outer bearing ring (8), and a one-piece inner bearing ring (9), which are arranged around the shaft (1) at positions along the shaft (1) spaced apart from the position of the ordinary rolling bearing (3) without contacting the shaft (1), and furthermore comprising a set of rolling bodies (16) for the spare shaft bearing and stored away from their position of use.

2. Arrangement as claimed in claim 1,
**characterized therein,**
that also a one-piece locking device (10), in form of a locating nut is positioned around the shaft (1) at a position along the shaft (1) spaced apart from the position of the ordinary rolling bearing (3) without contacting the shaft (1).

3. Arrangement as claimed in claim 1 or 2,
**characterized therein,**
that the locking nut (10) and/or the outer bearing ring (8) and the inner bearing ring (9) of the spare bearing, are all held immobile and without contacting each other during their idle time before replacing the ordinary bearing (3).

4. Arrangement as claimed in anyone of claims 1-3,
**characterized therein,**
that the spare shaft bearing also incorporates a cage for guiding and keeping the rolling bodies apart, which cage is a split cage stored in a position away from its position of use.

5. Arrangement as claimed in anyone of the preceding claims,
**characterized therein,**
that the components (8, 9, 10, 16) of the spare shaft bearing during their idle time have a coating of an anti-corrosive agent.

6. A method for mounting a spare bearing in an arrangement as claimed in claim 1,
**characterized in**
the following steps,
a) dismounting a detachable part (7) of the bearing housing to give access to the ordinary bearing (3) fitted therein, and intended to be replaced,
b) loosening the ordinary locking nut (5) and dismounting the ordinary bearing (3) from the grip around the shaft (1) and from the connection to the housing (6, 7) in conventional manner,
c) cutting up each one of the inner ring, the outer ring and the locking nut (5) in at least two parts each, and thereupon removing the parts of the inner ring, the outer ring and the locking nut (5) from the shaft (1),
d) inserting the spare rolling bodies (16) between the spare inner bearing ring (9) and the spare outer bearing ring (8),
e) displacing the spare bearing consisting of outer ring (8), inner ring (9) and rolling bodies (16) fitted therebetween axially along the shaft (1) until the grip between the inner spare bearing ring (9) and the shaft (1) has reached a level making such displacement difficult,
f) attaching a mounting tool (11-15) around the shaft (1) adjacent the spare bearing (8, 9, 16) to be mounted,
g) driving up the spare bearing (8 ,9, 16) to desired grip around the shaft (1) by means of the mounting tool (11-15),
h) removing the mounting tool (11-15) from the man shaft (1),
i) securing the spare locking nut (10) to the shaft, and
j) fitting the detachable part (7) of the housing.

7. A method as claimed in claim 6,
**characterized in**,
inserting during step d) a split rolling element cage between the inner bearing ring (9) and the outer bearing ring (8) for guiding and keeping the rolling bodies apart, and interconnecting the parts of said rolling element cage.

8. A method as claimed in claim 6 or 7,
**characterized in**,
cleaning before step d) the components (8, 9, 16) of the spare bearing from any coating of an anti-corrosive agent provided for the idle time of the spare bearing.

9. A method as clamed in anyone of claims 6-8,
**characterized therein,**
that an adapter sleeve (4) having a tapering outer envelope surface is used for fitting the internally tapering inner bearing ring (9) to the shaft (1).

10. A means for effecting the steps f) and g) for mounting a spare bearing as claimed in claim 6 or 9,
**characterized therein,**
that the means comprises a mounting tool kit incorporating a split support ring (11), a split hydraulic drive up tool comprising a number of individual tool segments (12), which are individually held together around and to the shaft (1) / adapter sleeve (4 , and that each one of the individual tool segments (12) has at least one recess (14) in which is movably fitted a plunger (15), arranged to be displaceable for displacing the spare bearing (8, 9, 16) to the position according to step g) of claim 5.

11. A means as claimed in claim 10,
**characterized therein,**
that the individual tool segments (12) are held together around the shaft (1) / adapter sleeve (4) by means of a detachable flat chain (13).

## Patentansprüche

1. Anordnung mit einer rotierenden Welle (1), die in einem herkömmlichen Wälzlager (3) gelagert ist, das einen Innenring, einen Außenring und eine Anzahl Wälzkörper aufweist, die zwischen dem Innenring und dem Außenring angeordnet sind, wobei der Innenring klemmend auf der Welle (1) sitzt und durch eine Stellmutter (5) in einer Weise festgelegt ist, die es dem Innenring ermöglicht, aus der Klemmung gelöst zu werden, und der Außenring in ein Gehäuse (6, 7) in einer Weise eingesetzt ist, die es ihm ermöglicht, aus dem Lagergehäuse herausgedrückt zu werden, **dadurch gekennzeichnet, dass** sie weiterhin ein Ersatzwellenlager, das einen einteiligen äußeren Lagerring (8) und einen einteiligen inneren Lagerring (9) umfasst, die um die Welle (1) in Stellungen entlang der Welle (1) mit Abstand zu der Position des herkömmlichen Wälzlagers (3) angeordnet sind, ohne die Welle (1) zu berühren, und zudem einen Satz Wälzkörper (16) für das Ersatzwellenlager aufweist, die entfernt von Ihrer Verwendungsposition gelagert sind.

2. Anordnung nach Anspruch 1, **dadurch gekennzeichnet, dass** auch eine einteilige Schließvorrichtung (10) in Form einer Stellmutter um die Welle (1) in einer Stellung entlang der Welle (1) mit Abstand von der Stellung des Wälzlagers (3) angeordnet ist, ohne die Welle (1) zu berühren.

3. Anordnung nach Anspruch 1 oder 2, **dadurch gekennzeichnet, dass** die Schließmutter (10) und/oder der äußere Lagerring (8) und der innere Lagerring (9) des Ersatzlagers unbeweglich und ohne Berührung miteinander während ihrer Leerlaufzeit gehalten sind, bevor sie das herkömmliche Lager (3) ersetzen.

4. Anordnung nach einem der Ansprüche 1 bis 3, **dadurch gekennzeichnet, dass** das Ersatzwellenlager auch einen Käfig zum Führen und getrennten Halten der Wälzkörper voneinander umfasst, wobei der Käfig ein geteilter Käfig ist, der in einer Lage entfernt von seiner Verwendungsposition gelagert ist.

5. Anordnung nach einem der vorhergehenden Ansprüche, **dadurch gekennzeichnet, dass** die Bauelemente (8, 9, 10, 16) des Ersatzwellenlagers während Ihrer Leerlaufzeit einen Überzug mit einem Korrosionsschutzmittel aufweisen.

6. Verfahren zur Montage eines Ersatzwellenlagers in einer Anordnung nach Anspruch 1, **gekennzeichnet durch** die folgenden Schritte:
a) Demontieren eines entfernbaren Teils (7) des Lagergehäuses, um den Zugang zu dem darin eingesetzten herkömmlichen Lager (3) zu ermöglichen, das ersetzt werden soll,
b) Lösen der herkömmlichen Schließmutter (5) und Demontieren des herkömmlichen Lagers (3) aus der Klemmung um die Welle und der Verbindung mit dem Gehäuse (6, 7) in herkömmlicher Weise,
c) Auftrennen sowohl des Innenring, des Außenrings als auch der Schließmutter (5) in jeweils wenigstens zwei Teile und daraufhin Entfernen der Teile des Innenring, des Außenrings und der Schließmutter (5) von der Welle,
d) Einfügen der Ersatzwälzkörper (16) zwischen den inneren Ersatzlagerring (9) und den äußeren Ersatzlagerring (8),
e) Verlagern des aus dem Außenring (8), dem Innenring (9) und den dazwischen eingesetzten Wälzkörpern (16) bestehenden Ersatzlagers axial entlang der Welle (1), bis die Klemmung zwischen dem inneren Ersatzlagerring (9) und der Welle (1) ein Niveau erreicht, das eine solche Verlagerung erschwert,
f) Anbringen eines Montagewerkzeuges (11-15) um die Welle (1) nahe des zu montierenden Ersatzlagers (8, 9, 16),
g) Auftreiben des Ersatzlagers (8, 9, 16) auf die Welle bis zur gewünschten Klemmung mit Hilfe des Montagewerkzeuges (11-15),
h) Entfernen des Montagewerkzeuges (11-15) von der Welle (1),
i) Festlegen der Ersatzschließmutter (10) an der Welle und
j) Aufsetzen des entfernbaren Teils (7) des Gehäuses.

7. Verfahren nach Anspruch 6, **dadurch gekennzeichnet, dass** während des Schrittes g) ein geteilter Wälzkörperkäfig zwischen dem inneren Lagerring (9) und dem äußeren Lagerring (8) eingefügt wird, um die Wälzkörper zu führen und getrennt voneinander zu halten, und die Teile des Wälzelementkäfigs miteinander verbunden werden.

8. Verfahren nach Anspruch 6 oder 7, **dadurch gekennzeichnet, dass** vor Schritt d) die Bauelemente (8, 9, 16) des Ersatzlagers von jeglichem Überzug aus Korrosionsschutzmittel, das für die Leerlaufzeit des Ersatzlagers vorgesehen ist, gereinigt werden.

9. Verfahren nach einem der Ansprüche 6 bis 8, **dadurch gekennzeichnet, dass** zum Aufsetzen des innenseitig geneigten inneren Lagerrings (9) auf die Welle (1) eine Adapterhülse (4) mit einer geneigten äußeren Hüllfläche eingesetzt wird.

10. Mittel zum Bewirken der Schritte f) und g) zur Montage eines Ersatzlagers nach Anspruch 6 oder 9, **dadurch gekennzeichnet, dass** die Mittel aus einem Montagewerkzeugsatz bestehen, der einen geteilten Stützring (11) und ein geteiltes hydraulisches Aufpresswerkzeug umfasst, das eine Anzahl individueller Werkzeugsegmente (12) aufweist, die um und an der Welle (1)/Adapterhülse (4) zusammengehalten sind, und dass jedes der individuellen Werkzeugsegmente (12) wenigstens eines Ausnehmung (14) besitzt, in welcher ein Kolben (15) beweglich eingesetzt ist, der zum Verlagern des Ersatzlagers (8, 9, 16) in die Position gemäß Schritt g) nach Anspruch 5 verlagerbar ist.

11. Mittel nach Anspruch 10, **dadurch gekennzeichnet, dass** die individuellen Werkzeugsegmente (12) mittels einer entfernbaren flachen Kette (13) um die Welle (1)/Adapterhülse (4) zusammengehalten werden.

## Revendications

1. Configuration comprenant un arbre rotatif (1) supporté dans un palier de roulement ordinaire (3) comprenant une bague intérieure, une bague extérieure et un certain nombre de corps de roulement agencés entre les bagues intérieure et extérieure, la bague intérieure étant fixée avec un agrippement à l'arbre (1) et fixée par un écrou de positionnement (5) de façon à lui permettre d'être libérée dudit agrippement et la bague extérieure étant disposée dans un boîtier (6, 7) de façon à lui permettre d'être poussée hors du boîtier de palier,
**caractérisée en ce qu'**elle comprend de plus :
un palier d'arbre de rechange incorporant une bague de palier extérieure d'un seul tenant (8), et une bague de palier intérieure d'un seul tenant (9), qui sont disposées autour de l'arbre (1) en des positions le long de l'arbre (1) mutuellement espacées à partir de la position du palier de roulement ordinaire (3) sans venir en contact avec l'arbre (1), et **en ce qu'**elle comprend de plus un jeu de corps de roulement (16) pour le palier d'arbre de rechange, et stockés loin de leur position d'utilisation.

2. Configuration selon la revendication 1,
**caractérisée en ce que** :
également, un dispositif de verrouillage d'un seul tenant (10), sous la forme d'un écrou de positionnement, est positionné autour de l'arbre (1) dans une position le long de l'arbre (1) espacée de la position du palier de roulement ordinaire (3), sans venir en contact avec l'arbre (1).

3. Configuration selon la revendication 1 ou 2,
**caractérisée en ce que** :
l'écrou de verrouillage (10) et/ou la bague de palier extérieure (8) et la bague de palier intérieure (9) du palier de rechange sont tous maintenus immobiles et sans contact entre eux durant leur temps d'inutilisation avant de remplacer le palier ordinaire (3).

4. Configuration selon l'une quelconque des revendications 1 à 3,
**caractérisée en ce que** :
le palier d'arbre de rechange incorpore également une cage pour guider et maintenir les corps de roulement espacés, cette cage étant une cage fendue stockée dans une position éloignée de sa position d'utilisation.

5. Configuration selon l'une quelconque des revendications précédentes,
**caractérisée en ce que** :
les composants (8, 9, 10, 16) du palier d'arbre de rechange, durant leur temps d'inutilisation, comportent un revêtement d'un agent anti-corrosion.

6. Procédé pour monter un palier de rechange dans une configuration selon la revendication 1,
**caractérisé par** les étapes suivantes, consistant à :
a) démonter une partie détachable (7) du boîtier de palier pour donner accès au palier ordinaire (3) disposé à l'intérieur de celui-ci, et qui doit être remplacé,
b) desserrer l'écrou de verrouillage ordinaire (5) et démonter le palier ordinaire (3) de l'agrippement autour de l'arbre (1) et du raccordement au boîtier (6, 7) d'une façon classique,
c) couper chacun parmi la bague intérieure, la bague extérieure et l'écrou de verrouillage (5) en au moins deux parties chacun, et retirer ensuite les parties de la bague intérieure, de la bague extérieure et de l'écrou de verrouillage (5) à partir de l'arbre (1),
d) insérer les corps de roulement de rechange (16) entre la bague de palier intérieure de rechange (9) et la bague de palier extérieure de rechange (8),
e) déplacer le palier de rechange comprenant la bague extérieure (8), la bague intérieure (9) et les corps de roulement (16) disposés entre celles-ci axialement le long de l'arbre (1) jusqu'à ce que l'agrippement entre la bague de palier intérieure de rechange (9) et l'arbre (1) ait atteint un niveau rendant ce déplacement difficile,
f) fixer un outil de montage (11 à 15) autour de l'arbre (1) au voisinage du palier de rechange (8, 9, 16) devant être monté,
g) amener le palier de rechange (8, 9, 16) dans l'agrippement désiré autour de l'arbre (1) à l'aide de l'outil de montage (11 à 15),
h) retirer l'outil de montage (11 à 15) de l'arbre (1),
i) fixer l'écrou de verrouillage de rechange (10) à l'arbre, et
j) fixer la partie détachable (7) du boîtier.

7. Procédé selon la revendication 6,
**caractérisé par** l'étape consistant à :
insérer, durant l'étape d), une cage d'éléments de roulement fendue entre la bague de palier intérieure (9) et la bague de palier extérieure (8) pour guider et maintenir les corps de roulement espacés, et interconnecter les parties de ladite cage d'éléments de roulement.

8. Procédé selon la revendication 6 ou 7,
**caractérisé par** l'étape consistant à :
nettoyer, avant l'étape d), les composants (8, 9, 16) du palier de rechange de tout revêtement d'un agent anti-corrosion disposé pour le temps de non-utilisation du palier de rechange.

9. Procédé selon l'une quelconque des revendications 6 à 8,
**caractérisé en ce que** :
un manchon adaptateur (4) ayant une surface d'enveloppe extérieure effilée est utilisé pour fixer la bague de palier intérieure intérieurement effilée (9) à l'arbre (1).

10. Moyens pour effectuer les étapes f) et g) pour monter un palier de rechange selon la revendication 6 ou 9,
**caractérisés en ce que** :
les moyens comprennent un ensemble d'outils de montage incorporant une bague de support fendue (11), un outil d'entraînement hydraulique fendu comprenant un certain nombre de segments d'outil individuels (12), qui sont individuellement maintenus ensemble autour de l'arbre (1)/manchon adaptateur (4) et sur ceux-ci, et **en ce que** chacun des segments d'outil individuels (12) comporte au moins une cavité (14) dans laquelle est disposé de façon à pouvoir se déplacer un plongeur (15), agencé de façon à pouvoir se déplacer afin de déplacer le palier de rechange (8, 9, 16) vers la position selon l'étape g) de la revendication 5.

11. Moyens selon la revendication 10,
**caractérisés en ce que** :
les segments d'outil individuels (12) sont maintenus ensemble autour de l'arbre (1)/manchon adaptateur (4) à l'aide d'une chaîne plate détachable (13).
